# EUROPEAN PATENT APPLICATION

(11) **EP 2 522 934 A2**
(43) Date of publication of application: **14.11.2012**
(21) Application number: 12166966.7
(22) Date of filing: 07.05.2012
(51) Int. Cl.: F25B 7/00, F25B 30/02, F25B 47/02

(54) **Heat storing apparatus having cascade cycle and control process of the same**

(30) Priority: 09.05.2011 KR 20110043561
(71) Applicant: LG Electronics, Inc., Seoul 150-721 (KR)
(72) Inventor: Kang, Donghoon, 641-110 Changwon-si (KR); Park, Heewoong, 641-110 Changwon-si (KR)
(74) Representative: Vossius & Partner

(57) **Abstract**

There is provided a heat storing apparatus having a cascade cycle includes a low-temperature cooling cycle and a high-temperature cooling cycle and include a heat storage tank connected with a heat storage heat exchanger of the high-temperature cooling cycle through a heat medium path and a bypass mechanism installed to bypass some of refrigerants compressed in a high-pressure compressor of the high-temperature cooling cycle to a cascade heat exchanger. Some of the refrigerants compressed in the high-pressure compressor are bypassed to the cascade heat exchanger to assist defrosting of an outdoor heat exchanger and the rest of the refrigerants compressed in the high-pressure compressor can heat a heat medium in the heat storage heat exchanger, the temperature of the heat storage tank can be prevented from decreasing during a defrost operation and the outdoor heat exchange can be efficiently defrosted.

## Description

The present invention relates to a heat storing apparatus having a cascade cycle and a control process of the same, and more particularly, to a heat storing apparatus having a cascade cycle that can store heat in a heat storage tank with air as a heat source and a control process of the same.

In general, a cascade cycle includes a low-temperature cooling cycle using a low-temperature refrigerant and a high-temperature cooling cycle using a high-temperature refrigerant. In the cascade cycle, the high-temperature refrigerant is evaporated and the low-temperature refrigerant is condensed in a cascade heat exchanger to efficiently heat a heat medium with the high-temperature refrigerant even though a room temperature is low and when the heat storage tank is connected to the high-temperature cooling cycle, the cascade heat exchanger can be used as a heat storing apparatus storing heat in the heat storage tank.

The low-temperature cooling cycle can include a low-temperature compressor and the cascade heat exchanger and a low expansion valve and an air heat exchanger. The high-temperature cooling cycle can include a high-temperature compressor and a heat storage heat exchanger and a high-temperature expansion valve and the cascade heat exchanger. Heat of air can be stored in the heat storage tank in driving the low-temperature compressor and the high-temperature compressor.

It is an object of the invention to provide a heat storing apparatus having cascade cycle and control process of the same. This object is solved with the features of the independent claims.

The dependent claims relate to further aspects of the invention.

Since hot water in the heat storage tank is used to defrost the air heat exchanger in a heat pump apparatus having the cascade cycle in the related art, heat storage performance of the heat storage tank deteriorates in a defrosts operation and power consumption can be excessively used to increase the temperature of the heat storage tank again.

The present invention has been made in an effort to provide a storage apparatus having a cascade cycle that uses a refrigerant compressed by a high-pressure compressor to defrost an outdoor heat exchanger to minimize power consumption without a decrease in the temperature of the heat storage tank in a defrost operation.

Further, the present invention has been made in an effort to provide a control process of the storage apparatus having high heat storage efficiency because heat can be continuously stored in the heat storage tank while defrosting the outdoor heat exchanger.

An exemplary embodiment of the present invention provides a heat storing apparatus having a cascade cycle, including: a low-temperature cooling cycle having a heat storage mode in which a first refrigerant evaporates a second refrigerant in a cascade heat exchanger while the first refrigerant is circulated to a low-pressure compressor, a cascade heat exchanger, a low-pressure expansion mechanism, and an outdoor heat exchanger in sequence and a defrost mode in which the first refrigerant defrosts the outdoor heat exchanger while the first refrigerant is circulated to the low-pressure compressor, the outdoor heat exchanger, the low-pressure expansion mechanism, and a cascade heat exchanger in sequence; a high-pressure cooling cycle in which the second refrigerant heats a heat medium in the heat storage heat exchanger while the second refrigerant is circulated to a high-pressure compressor, a heat storage heat exchanger, a high-pressure expansion mechanism, and the cascade heat exchanger in sequence; a heat storage tank connected with the heat storage heat exchanger through a heat medium path; and a bypass mechanism installed to bypass some of the second refrigerants compressed in the high-pressure compressor to the cascade heat exchanger.

The bypass mechanism may bypass some of the second refrigerants in the defrost mode of the lower-temperature cooling cycle.

The bypass mechanism may be connected between the high-pressure expansion mechanism and the cascade heat exchanger.

The bypass mechanism may include a first bypass path connected between the high-pressure compressor and the heat storage heat exchanger, a second bypass path connected between the high-pressure expansion mechanism and the cascade heat exchanger, and a bypass valve connecting the first bypass path and the second bypass path and controlling the second refrigerant.

The bypass valve may be opened when the low-temperature cooling cycle is in the defrost mode and closed when the low-temperature cooling cycle is in the heat storage mode.

The bypass mechanism may further include a flow controller controlling the amount of the bypassed second refrigerants.

The flow controller may be a capillary tube installed at least at one side of the first bypass path and the second bypass path.

The heat storing apparatus may further include a control unit controlling the low-temperature cooling cycle and the high-temperature cooling cycle and controlling the bypass mechanism under a defrost condition.

The heat storing apparatus may further include a heat medium pump installed in the heat medium path to pump the heat medium, and a midnight power supplying line supplying midnight power may be connected to the low-temperature cooling cycle and the high-temperature cooling cycle and a general power supplying line supplying general power may be connected to the heat medium pump.

The low-pressure compressor, the low-pressure expansion mechanism, and the outdoor heat exchanger may be installed in an outdoor unit, and the cascade heat exchanger, the high-pressure compressor, the heat storage heat exchanger, and the high-pressure expansion mechanism may be installed in an indoor unit.

Another exemplary embodiment of the present invention provides a control process of a heat storing apparatus having a cascade cycle, including: a heat storing operation of storing heat in a heat storage tank by driving both a low-temperature cooling cycle and a high-temperature cooling cycle in a heat storage mode; and a defrost and heat storing operation of switching the low-temperature cooling cycle to a defrost mode and bypassing some of second refrigerants compressed in a high-pressure compressor of the high-temperature cooling cycle to a cascade heat exchanger after the heat storing operation.

After the defrost and heat storing operation is terminated, the heat storing operation may be returned.

According to the exemplary embodiments of the present invention, some of refrigerants compressed in the high-pressure compressor are bypassed to the cascade heat exchanger to assist defrosting of the outdoor heat exchanger and the rest of the refrigerants compressed by the high-pressure compressor can heat the heat medium in the heat storage heat exchanger, and as a result, the temperature of the heat storage tank can be prevented from decreasing during the defrost operation and the outdoor heat exchange can be efficiently defrosted.

Further, since the defrost and heat storage operations can be performed during the heat storage operation, heat can be continuously stored in the heat storage tank and the heat storage performance is high.

### BRIEF DESCRIPTION OF THE DRAWINGS

FIG. 1 is a configuration diagram showing a flow of a refrigerant and a flow of a heat medium in a heat storage operation of a heat storing apparatus having a cascade cycle according to an exemplary embodiment of the present invention;
FIG. 2 is a configuration diagram showing a flow of a refrigerant and a flow of a heat medium in defrost and heat storage operations of the heat storing apparatus having the cascade cycle according to the exemplary embodiment of the present invention;
FIG. 3 is a control block diagram of the heat storing apparatus having the cascade cycle according to the exemplary embodiment of the present invention;
FIG. 4 is a flowchart showing a control process of a heat storing apparatus having a cascade cycle according to an exemplary embodiment of the present invention; and
FIG. 5 is a configuration diagram showing a flow of a refrigerant and a flow of a heat medium in a heat storing apparatus having a cascade cycle according to another exemplary embodiment of the present invention.

### DETAILED DESCRIPTION

Hereinafter, exemplary embodiments of the present invention will be described in detail with reference to the accompanying drawings.

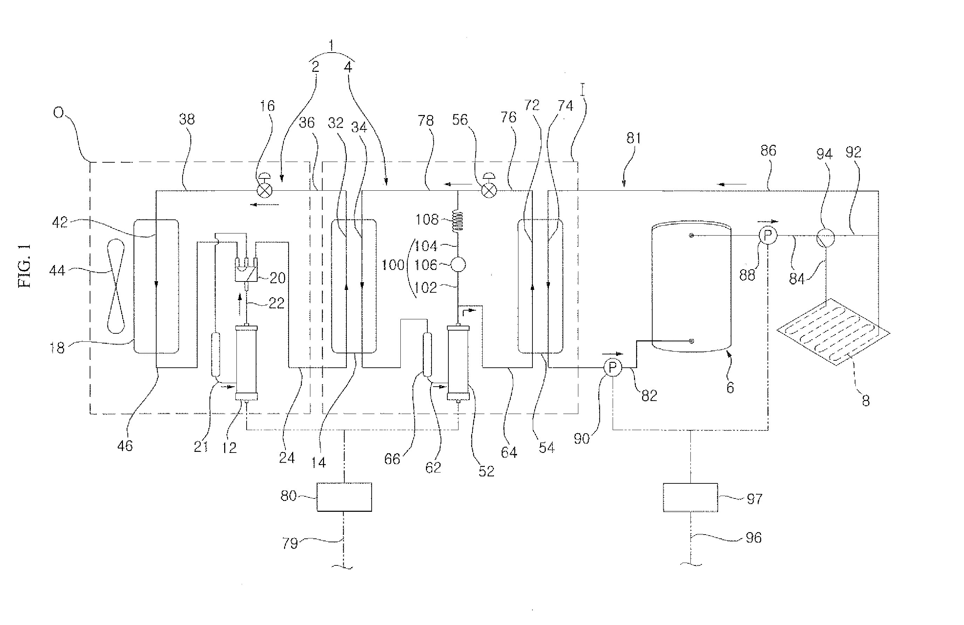

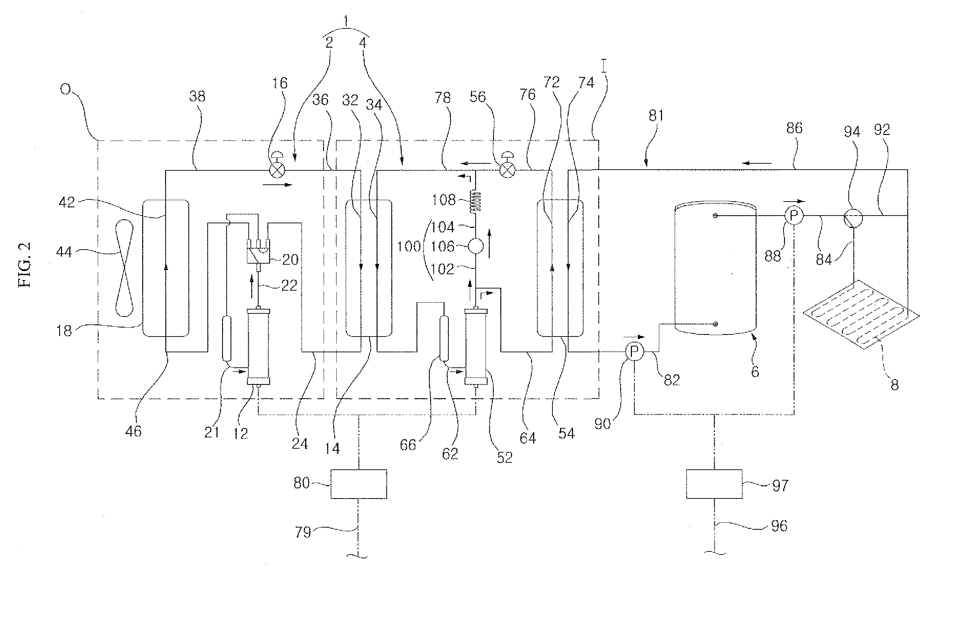

FIG. 1 is a configuration diagram showing a flow of a refrigerant and a flow of a heat medium in a heat storage operation of a heat storing apparatus having a cascade cycle according to an exemplary embodiment of the present invention. FIG. 2 is a configuration diagram showing a flow of a refrigerant and a flow of a heat medium in defrost and heat storage operations of the heat storing apparatus having the cascade cycle according to the exemplary embodiment of the present invention.

The heat storing apparatus having the cascade cycle according to the exemplary embodiment may include a heat pump 1 and a heat storage tank 6 storing heat by the heat pump 1.

The heat pump 1 may include a low-temperature cooling cycle 2 where a first refrigerant is circulated and a high-temperature cooling cycle 4 where a second refrigerant is circulated. The first refrigerant and the second refrigerant may be composed of refrigerants having different condensation temperatures and evaporation temperatures. For example, when the first refrigerant is R410A having a low condensation temperature and a low evaporation temperature, the second refrigerant may be composed of R134a which is higher in condensation temperature and evaporation temperature than the first refrigerant.

The low-temperature cooling cycle 2 may have a heat storage mode and a defrost mode. In the low-temperature cooling cycle 2, while the first refrigerant is circulated to a low-pressure compressor 12, a cascade heat exchanger 14, a low-pressure expansion mechanism 16, and an outdoor heat exchanger 18 in sequence, the first refrigerant may evaporate the second refrigerant in the cascade heat exchanger 14 during the heat storage mode. In the low-temperature cooling cycle 2, while the first refrigerant is circulated to the low-pressure compressor 12, the outdoor heat exchanger 18, the low-pressure expansion mechanism 16, and the cascade heat exchanger 14, the first refrigerant may defrost the outdoor heat exchanger 18 during the defrost mode.

The low-temperature cooling cycle 2 may further include a switching valve 20 capable of switching the heat storage mode and the defrost mode. The switching valve 20 may be constituted by a 4-way valve. The switching valve 20 may be connected with the low-pressure compressor 12, the cascade heat exchanger 14, and the outdoor heat exchanger 18 through refrigerant pipes. The switching valve 20 may allow the first refrigerant evaporated in the outdoor heat exchanger 18 to flow to the low-pressure compressor 12 and the first refrigerant compressed in the low-pressure compressor 12 to flow to the cascade heat exchanger 14 during the heat storage mode. The switching valve 20 may allow the first refrigerant evaporated in the cascade heat exchanger 14 to flow to the low-pressure compressor 12 and the first refrigerant compressed in the low-pressure compressor 12 to flow to the outdoor heat exchanger 18 during the defrost mode.

A suction refrigerant pipe 21 through which the first refrigerant is sucked into the low-pressure compressor 12 may be connected to the low-pressure compressor 12. A discharge refrigerant pipe 22 through which the first refrigerant compressed in the low-pressure compressor 12 is discharged may be connected to the low-pressure compressor 12. An accumulator 23 storing a liquid refrigerant in the first refrigerant may be installed on the suction refrigerant pipe 21. The suction refrigerant pipe 21 and the discharge refrigerant pipe 22 may be connected to the switching valve 20.

The switching valve 20 may be connected with the cascade heat exchanger 14 through a switching valve-cascade heat exchanger connection pipe 24.

The cascade heat exchanger 14 is a heat exchanger that is common to the lower-temperature cooling cycle 2 and the high-temperature cooling cycle 4. The cascade heat exchanger 14 may include a first refrigerant path 32 through which the first refrigerant passes and a second refrigerant path 34 through which the second refrigerant passes. In the cascade heat exchanger 14, the first refrigerant may be condensed while dissipating heat to the second refrigerant at the time of passing through the first refrigerant path 32 during the heat storage mode. In the cascade heat exchanger 14, the second refrigerant may be evaporated while absorbing the heat of the first refrigerant at the time of passing through the second refrigerant path 34 during the heat storage mode. In the cascade heat exchanger 14, the first refrigerant may be evaporated while absorbing the heat of the second refrigerant at the time of passing through the first refrigerant path 32 during the defrost mode. In the cascade heat exchanger 14, the second refrigerant may dissipate heat the second refrigerant at the time of passing through the second refrigerant path 34 during the defrost mode. The cascade heat exchanger 14 may be constituted by a plate type heat exchanger in which the first refrigerant path 32 and the second refrigerant path 34 are alternately formed. The cascade heat exchanger 14 may be constituted by a dual pipe heat exchanger in which any one of the first refrigerant path 32 and the second refrigerant path 34 is placed outside the other one.

In the switching valve 20, the first refrigerant path 32 may be connected with the switching valve-cascade heat exchanger 14 connection pipe 24. The cascade heat exchanger 14 may be connected with the low-pressure expansion mechanism 16 through a cascade heat exchanger-low-pressure expansion mechanism connection pipe 36. The cascade heat exchanger-low-pressure expansion mechanism connection pipe 36 may be connected to the first refrigerant path 32 of the cascade heat exchanger 14.

The low-pressure expansion mechanism 16 may be constituted by a solenoid expansion valve of which an opening degree can be controlled. The low-pressure expansion mechanism 16 may be connected with the outdoor heat exchanger through a low-pressure expansion mechanism-outdoor heat exchanger connection pipe 38.

The heat pump 1 may be constituted by an air heat source heat pump in which the first refrigerant takes heat of outdoor air while passing the outdoor heat exchanger 18. The outdoor heat exchanger 18 may be constituted by an air-refrigerant heat exchanger in which the outdoor air and the first refrigerant exchange heat. The outdoor heat exchanger 18 may include a refrigerant path 42 through which the first refrigerant passes. The outdoor heat exchanger 18 may be constituted by a pin-tube type heat exchanger including a tube forming the refrigerant path 42 and a pin coupled to the tube. The heat storing apparatus having the cascade cycle may further include an outdoor fan 44 that allows the outdoor air to flow to the outdoor heat exchanger 18. The outdoor heat exchanger 18 may serve as an evaporator in which the flowing refrigerant is evaporated in the low-pressure expansion mechanism 16 during the heat storage mode and may be defrosted by the flowing refrigerant in the switching valve 20 during the defrost mode. The refrigerant path 42 of the outdoor heat exchanger 18 may be connected to the low-pressure expansion mechanism-outdoor heat exchanger connection pipe 38. The refrigerant path 42 of the outdoor heat exchanger 18 may be connected with the switching valve 20 through the outdoor heat exchanger-switching valve connection pipe 46.

In the high-temperature cooling cycle 4, while the second refrigerant is circulated to the high-pressure compressor 52, the heat storage heat exchanger 54, the high-pressure expansion mechanism 56, and the cascade heat exchanger in sequence, the second refrigerant may heat the heat medium in the heat storage heat exchanger 54. In the high-temperature cooling cycle 4, the high-pressure compressor 52, the heat storage heat exchanger 54, the high-pressure expansion mechanism 56, and the case cascade heat exchanger 14 may be connected through the refrigerant pipe.

A suction refrigerant pipe 62 through which the second refrigerant is sucked into the high-pressure compressor 52 may be connected to the high-pressure compressor 52. A discharge refrigerant pipe 64 through which the second refrigerant compressed in the high-pressure compressor 52 may be connected to the high-pressure compressor 52. The suction refrigerant pipe 62 may be connected to the second refrigerant path 34 of the cascade heat exchanger 14. The discharge refrigerant pipe 64 may be connected to the heat storage heat exchanger 54. An accumulator 66 storing the liquid refrigerant in the second refrigerant may be installed in the suction refrigerant pipe 62.

The heat storage heat exchanger 54 is the heat exchanger in which the second refrigerant and the heat medium exchange heat. The heat storage heat exchanger 54 may include a refrigerant path 72 through which the second refrigerant passes and a heat medium heat absorption path 74 through which the heat medium passes. In the heat storage heat exchanger 54, the second refrigerant may be condensed while dissipating heat to the heat medium at the time of passing through the refrigerant path 72 and the heat medium may be heated while absorbing the heat of the second refrigerant at the time of passing through the heat medium refrigerant path 34. The heat storage heat exchanger 54 may be constituted by a plate type heat exchanger in which the refrigerant path 72 and the heat medium heat absorption path 74 are alternately formed. The heat storage heat exchanger 54 may be constituted by a dual pipe heat exchanger in which any one of the refrigerant path 72 and the heat medium heat absorption path 74 is placed outside the other one. In the hest storage heat exchanger 54, the refrigerant path 72 may be connected to the discharge refrigerant pipe 64. The heat storage heat exchanger 54 may be connected with the high-pressure expansion mechanism 56 through a heat storage heat exchanger-high-pressure expansion mechanism connection pipe 76. The heat storage heat exchanger-high-pressure expansion mechanism connection pipe 76 may be connected to the refrigerant path 72 of the heat storage heat exchanger 54.

The high-pressure expansion mechanism 56 may be constituted by a solenoid expansion valve of which an opening degree can be controlled. The high-pressure expansion mechanism 56 may be connected with the cascade heat exchanger 14 through a high-pressure expansion mechanism-cascade heat exchanger connection pipe 78. The high-pressure expansion mechanism-cascade heat exchanger connection pipe 78 may be connected to the second refrigerant path 34 of the cascade heat exchanger 14.

The heat storing apparatus having the cascade cycle may be constituted by an integrated heat storing apparatus in which the low-temperature cooling cycle 2 and the high-temperature cooling cycle 4 are installed together in one case.

The heat storing apparatus having the cascade cycle may be constituted by a separated heat storing apparatus in which the low-temperature cooling cycle 2 and the high-temperature cooling cycle 4 are distributively placed in an outdoor unit O installed in an outdoor area and an indoor unit I installed in an indoor area.

The heat storing apparatus having the cascade cycle is preferably constituted by the separated heat storing apparatus having the outdoor unit 0 and the indoor unit 1.

The low-pressure compressor 12, the low-pressure expansion mechanism 16, the outdoor heat exchanger 18, and the outdoor fan 44 may be installed in the outdoor unit O. The cascade heat exchanger 14, the high-pressure compressor 52, the heat storage heat exchanger 54, and the high-pressure expansion mechanism 56 may be installed in the indoor unit I.

The heat pump 1 may be driven by midnight power and a midnight power supplying line 79 through which the midnight power is supplied may be connected to the low-temperature cooling cycle 2 and the high-temperature cooling cycle 4 which are the heat pump 1. The heat pump 1 may include a midnight power supplying unit 80 that allows power to be supplied through the midnight power supplying line 79 only in midnight times. The midnight power supplying unit 80 has a timer to allow the midnight power to pass only in predetermined times.

The heat storage tank 6 is connected with the heat storage heat exchanger 54 through a heat medium path 81 to store heat of the heat medium heated in the heat storage heat exchanger 54. The heat storage tank 6 is connected with a heat demander 8 to allow the stored heat to be used in the heat demander 8. The heat storage tank 6 may be constituted by a bath in which the heat medium is introduced and stored. The heat storage tank 6 is connected with the heat demander 8 through the heat medium path 81 to move the heat medium heated in the heat storage heat exchanger 54 which is stored in the heat storage tank 6 to the heat demander 8.

The heat demander 8 may be constituted by a floor heating pipe installed in an indoor floor. The heat demander 8 may be constituted by a radiator installed in the indoor area. The heat demander 8 may be constituted by a fan coil unit. That is, the heat demander 8 may include a coil through which the heat medium passes, a fan that makes indoor air to flow to the coil, and a casing in which the coil and the fan are installed and an air suction port in which the indoor air is sucked and an air exhaust port in which air heat-exchanged by the coil is exhausted.

The heat medium path 81 may be configured to circulate the heat medium in the heat storage heat exchanger 54, the heat storage tank 6, and the heat demander 8. The heat medium path 81 may include a heat storage heat exchanger-heat storage tank connection path 82 connecting the heat medium heat absorption path 74 of the heat storage heat exchanger 54 and the heat storage tank 6, a heat storage tank-heat demander connection pipe 84 connecting the heat storage tank 6 and the heat demander 8, and a heat demander-heat storage heat exchanger connection pipe 86 connecting the heat demander 8 and the heat medium heat absorption path 74 of the heat storage heat exchanger 54. Heat medium pumps 88 and 90 pumping the heat medium may be installed in the heat medium path 81. The heat medium pumps 88 and 90 may include a heat demander pump 88 installed in the heat storage tank-heat demander connection pipe 84. The heat medium pumps 88 and 90 may include a heat storage tank 90 installed in the heat storage heat exchanger-heat storage tank connection pipe 82. The heat medium pumps 88 and 90 may be driven at a predetermined time interval in order to prevent the heat medium path 81 from being frozen or the heat medium heat absorption path 74 from being frozen. The heat medium pumps 88 and 90 may be driven at the predetermined time interval regardless of an outdoor temperature and may be driven at the predetermined time interval only when the outdoor temperature is equal to or lower than a predetermined temperature. A bypass path 92 in which the heat medium discharged from the heat storage tank 6 to bypass the heat demander 8 may be formed in the heat medium path 81. A hat medium path switching valve 94 that allows the heat medium discharged from the heat storage tank 6 to flow to the heat demander 8 or to the bypass path 92 may be installed in the heat medium path 81.

In the heat storing apparatus having the cascade cycle, the heat medium pumps 88 and 90 may be driven to prevent freezing in times other than midnight. A general power supplying line 96 may be connected to the heat medium pumps 88 and 90 and a general power supplying unit 97 may supply or interrupt power supplied through the general power supplying line 96.

The heat storage apparatus having the cascade cycle includes a bypass mechanism 100 installed to bypass some of the second refrigerants compressed in the high-pressure compressor 52 to the cascade heat exchanger 14 as shown in FIG. 2. The bypass mechanism 100 may bypass some of the second refrigerants to the cascade heat exchanger 14 during the defrost mode of the low-temperature cooling cycle 2.

In the low-temperature cooling cycle 2, the low-temperature and low-pressure first refrigerant passes through the cascade heat exchanger 14 and the high-temperature second refrigerant needs to flow to the cascade heat exchanger 14 in order to defrost the outdoor heat exchanger 18. When the second refrigerant of the high-temperature cooling cycle 2 is circulated to the high-pressure compressor 52, the cascade heat exchanger 14, the high-pressure expansion mechanism 56, and the heat storage heat exchanger 54 in sequence, the high-temperature second refrigerant may be circulated to the cascade heat exchanger 14. However, in this case, the low-temperature and low-pressure second refrigerant flows in the heat storage heat exchanger 54 and the heat storage tank 6 cannot store heat or the heat storage tank 6 is rather cooled while the outdoor heat exchanger 18 is defrosted.

On the contrary, when some of the second refrigerants compressed in the high-pressure compressor 52 are bypassed to the cascade heat exchanger 14 through the bypass mechanism 100, the high-temperature and high-pressure second refrigerant bypassed to the cascade heat exchanger 14 may evaporate the first refrigerant while passing through the cascade heat exchanger 14 and the rest of the second refrigerants compressed in the high-pressure compressor 52, which do not flow to the bypass mechanism 100 may heat the heat medium while passing through the heat storage heat exchanger 54. That is, the heat pump 1 may perform defrost and heat storing operations to store heat in the heat storage tank 6 as well as defrost the outdoor heat exchanger 18.

When the heat storing apparatus having the cascade cycle is subjected to a defrost condition while performing the heat storing operation, the heat storing apparatus may perform the defrost and heat storing operations while continuously performing the heat storing operation and when the defrost of the outdoor heat exchanger 18 is completed, the heat storing apparatus may switch the current operation to the heat storing operation and the heat storage tank 6 may store heat continuously regardless of the defrost of the outdoor heat exchanger 18.

The bypass mechanism 100 may be configured to bypass some of the second refrigerants to the heat storage heat exchanger 54 and the high-pressure expansion mechanism 56. The bypass mechanism 100 may be connected between the high-pressure expansion mechanism 56 and the cascade heat exchanger 14.

In the bypass mechanism 100, when some of the second refrigerants are bypassed between the heat storage heat exchanger 54 and the high-pressure expansion mechanism 56, some second refrigerants are expanded to a low-temperature and low-pressure state in the high-pressure expansion mechanism 56 and thereafter, pass through the cascade heat exchanger 14, and as a result, sufficient defrost performance cannot be achieved and some second refrigerants are most preferably bypassed between the high-pressure expansion mechanism 56 and the cascade heat exchanger 14.

The bypass mechanism 100 may include a first bypass path 102 connected between the high-pressure compressor 52 and the heat storage heat exchanger 54 (64), a second bypass path 104 connected between the high-pressure expansion mechanism 56 and the cascade heat exchanger 14 (78), and a bypass valve 106 connecting the first bypass path 102 and the second bypass path 104 and controlling the second refrigerant.

The bypass valve 106 is opened during the defrost mode of the low-temperature cooling cycle 2 to allow some of the high-temperature and high-pressure second refrigerants compressed in the high-pressure compressor 52 to flow to the cascade heat exchanger 14. The bypass valve 106 is closed during the heat storage mode of the low-temperature cooling cycle 2 to allow all of the high-temperature and high-pressure second refrigerants compressed in the high-pressure compressor 52 to flow to the heat storage heat exchanger 54.

The bypass mechanism 100 may further include a flow controller 108 controlling the amount of the bypassed second refrigerant. The flow controller 108 may be installed at least at one side of the first bypass path 102 and the second bypass path 104. The flow controller 108 is constituted by a capillary tube to allow only some of the high-temperature and high-pressure second refrigerants compressed in the high-pressure compressor 52 to bypass the heat storage heat exchanger 54 and the high-pressure expansion mechanism 56.

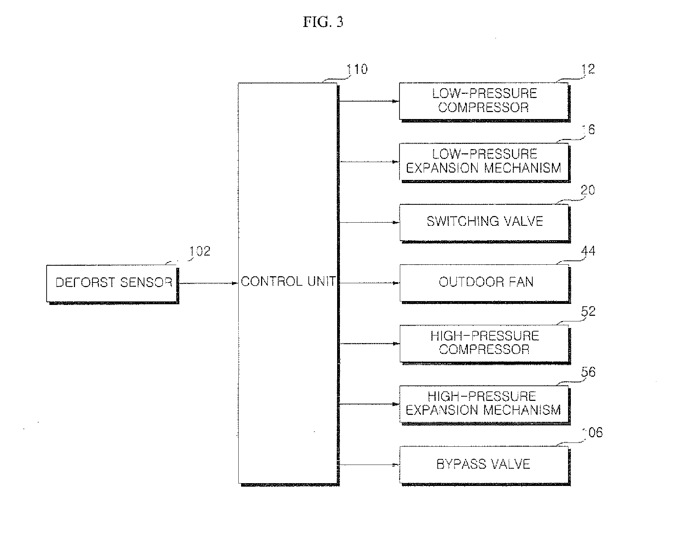

FIG. 3 is a control block diagram of the heat storing apparatus having the cascade cycle according to the exemplary embodiment of the present invention.

The heat storing apparatus having the cascade cycle may further include a control unit 110 controlling the low-temperature cooling cycle 2 and the high-temperature cooling cycle 4. The control unit 110 may control the bypass mechanism 100 under the defrost condition.

The heat storing apparatus having the cascade cycle may further include a defrost sensor 112 that can sense the defrost condition and a defrost completion condition. Herein, the defrost sensor 112 may be constituted by at least one of an outdoor temperature sensor sensing the temperature of the outdoor heat exchanger 18, an outdoor temperature sensor sensing an outdoor temperature, and a timer sensing an accumulation time of a heat storing operation.

When the sensed condition corresponds to a predetermined condition among various conditions such as a condition that the present temperature of the outdoor heat exchanger 18 is equal to or lower than a predetermined defrost temperature and a condition that the accumulation time of the heat storing operation accumulated in the timer is equal to or more than a predetermined defrost time, the control unit 110 judges that the sensed condition is the defrost condition to start the defrost and heat storing operations.

When the sensed condition corresponds to a predetermined condition among various conditions such as a condition that the present temperature of the outdoor heat exchanger 18 is equal to or lower than a predetermined defrost temperature and a condition that the accumulation time of the heat storing operation accumulated in the timer is equal to or more than a predetermined defrost time, the control unit 110 judges that the sensed condition is the defrost condition to start the defrost and heat storing operations.

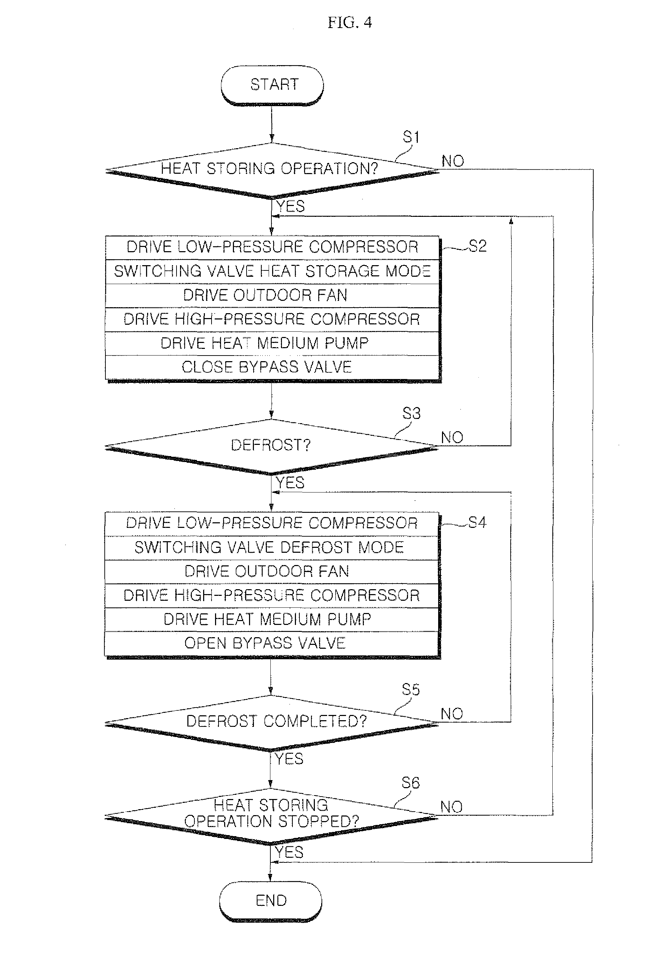

FIG. 4 is a flowchart showing a control process of a heat storing apparatus having a cascade cycle according to an exemplary embodiment of the present invention.

The control process of the heat storing apparatus having the cascade cycle according to the exemplary embodiment may include heat storing operations S1 and S2 and defrost and heat storing operations S3, S4, and S5.

The heat storing operations S1 and S2 as a step of storing heat in the heat storage tank 6 by driving the heat pump 1 may start in the midnight time or when a target heat storage temperature of the heat storage tank 6 is equal to lower than a heat storing operation starting temperature.

In the heat storing operations S1 and S2, the low-temperature cooling cycle 2 and the high-temperature cooling cycle 4 are driven during the heat storage mode to store heat in the heat storage tank 6.

Hereinafter, the heat storing operations S1 and S2 will be described in detail.

The control unit 110 may drive the low-pressure compressor 12, control the switching valve 20 in the heat storage mode, control the low-pressure expansion mechanism 16, and drive the outdoor fan 44, during the heat storing operation.

The control unit 110 may drive the high-pressure compressor 52, control the high-pressure expansion mechanism 16, and turn off the bypass valve 106, during the heat storing operation.

When the low-pressure compressor 12 is driven, the high-temperature and high-pressure first refrigerant is discharged from the low-pressure compressor 12, the first refrigerant passes through the switching valve 20 and thereafter, flows to the cascade heat exchanger 14, and the first refrigerant exchanges heat with the second refrigerant to be condensed while passing through the cascade heat exchanger 14. The condensed refrigerant is expanded while passing through the low-pressure expansion mechanism 16 and thereafter, flows to the outdoor heat exchanger 18 to be evaporated while exchanging heat with the outdoor air in the outdoor heat exchanger 18. The evaporated first refrigerant passes through the switching valve 20 and thereafter, is sucked into the low-pressure compressor 12. That is, the first refrigerant is evaporated in the outdoor heat exchanger 18 and condensed in the cascade heat exchanger 14 to evaporate the second refrigerant.

When the high-pressure compressor 120 is driven, the high-temperature and high-pressure second refrigerant is discharged from the high-pressure compressor 52 and the second refrigerant is not bypassed to the cascade heat exchanger 14 as the bypass valve 106 is closed and all of the second refrigerants exchange heat with the heat medium to be condensed while passing through the heat storage heat exchanger 54. The condensed refrigerant is expanded while passing through the high-pressure expansion mechanism 56 and thereafter, flows to the cascade heat exchanger 14 to be evaporated while exchanging heat with the first refrigerant. The evaporated second refrigerant is sucked into the high-pressure compressor 52. That is, the second refrigerant is evaporated in the cascade heat exchanger 14 and condensed in the heat storage heat exchanger 54 to heat the heat medium.

Meanwhile, the heat medium pumps 88 and 90 are driven during the heat storage mode and the heat medium heated while exchanging heat with the second refri gerant in the heat storage heat exchanger 54 moves to the heat storage tank 6 to be stored in the heat storage tank 6. The heat medium of the heat storage tank 6 flows to the heat demander 8 to transfer heat to the heat demander 8 and thereafter, flows to the heat storage heat exchanger 54 again to exchange heat with the second refrigerant. That is, the heat medium is circulated to the heat storage heat exchanger 54, the heat storage tank 6, and the heat demander 8 to heat the heat demander 8.

During the heat storing operation, the storing apparatus having the cascade cycle may be subjected to the defrost condition and the defrost and heat storing operations S3, S4, and S5 start.

In the defrost and heat storing operations S3, S4, and S5, the low-temperature cooling cycle 2 is switched to the defrost mode and some of the second refrigerants compressed in the high-pressure compressor 5 of the high-temperature cooling cycle 4 are bypassed to the cascade heat exchanger 14 after the heat storing operations S1 and S2.

Hereinafter, the defrost and heat storing operations S3, S4, and S5 will be described in detail.

The control unit 110 may drive the low-pressure compressor 12, control the switching valve 20 in the heat storage mode, control the low-pressure expansion mechanism 16, and drive the outdoor fan 44, during the defrost and heat storing operations.

The control unit 110 may drive the high-pressure compressor 52, control the high-pressure expansion mechanism 16, and turn on the bypass valve 106, during the defrost and heat storing operations.

When the low-pressure compressor 12 is driven, the high-temperature and high-pressure first refrigerant is discharged from the low-pressure compressor 12, the first refrigerant passes through the switching valve 20 and thereafter, flows to the outdoor heat exchanger 18, and the first refrigerant is condensed while defrosting the outdoor heat exchanger 18. The condensed refrigerant is expanded while passing through the low-pressure expansion mechanism 16 and thereafter, flows to the cascade heat exchanger 14 to be evaporated while exchanging heat with the second refrigerant. The evaporated first refrigerant passes through the switching valve 20 and thereafter, is sucked into the low-pressure compressor 12. That is, the first refrigerant is evaporated in the cascade heat exchanger 14 and condensed in the outdoor heat exchanger 18 to defrost the outdoor heat exchanger 18.

When the high-pressure compressor 120 is driven, the high-temperature and high-pressure second refrigerant is discharged from the high-pressure compressor 52 and some of the second refrigerants are bypassed to the bypass mechanism 100 as the bypass valve 106 is opened and the rest of the second refrigerants exchange heat with the heat medium to be condensed while passing through the heat storage heat exchanger 54. The condensed refrigerant is expanded while passing through the high-pressure expansion mechanism 56 and thereafter, is mixed with the refrigerant bypassed to the bypass mechanism 100, and as a result, the temperature of the corresponding refrigerant increases. The temperature-increased refrigerant flows to the cascade heat exchanger 14 to evaporate the first refrigerant while exchanging heat with the first refrigerant and thereafter, is sucked into the high-pressure compressor 52. That is, some of the second refrigerants are bypassed to the cascade heat exchanger 14 to be used to evaporate the first refrigerant and the rest is condensed in the heat storage heat exchanger 54 to heat the heat medium.

Meanwhile, the heat medium pumps 88 and 90 during the defrost and heat storing operations are driven similarly in the heat storage mode and the heat medium heated while exchanging heat with the second refrigerant in the heat storage heat exchanger 54 moves to the heat storage tank 6 to be stored in the heat storage tank 6. The heat medium of the heat storage tank 6 flows to the heat demander 8 to transfer heat to the heat demander 8 and thereafter, flows to the heat storage heat exchanger 54 again to exchange heat with the second refrigerant. That is, the heat medium is circulated to the heat storage heat exchanger 54, the heat storage tank 6, and the heat demander 8 to heat the heat demander 8.

During the defrost and heat storing operations, the heat storing apparatus having the cascade cycle may be subjected to the defrost completion condition and the heat storing apparatus having the cascade cycle may return to the heat storing operations S1 and S2 after the defrost and heat storing operations S3, S4, and S5.

That is, the heat storing apparatus having the cascade cycle may continuously store heat in the heat storage tank 6 while alternately repeating the defrost operation and the defrost and heat storing operations and efficiently defrost the outdoor heat exchanger 18.

Meanwhile, after the defrost and heat storing operations are terminated, the heat pump 1 may stop in a time which deviates from the midnight time or when the target heat storage temperature of the heat storage tank 6 is equal to or higher than a heat storing operation stopping temperature (S6).

When the heat pump 1 stops, the low-pressure compressor 12 and the high-pressure compressor 52 may stop.

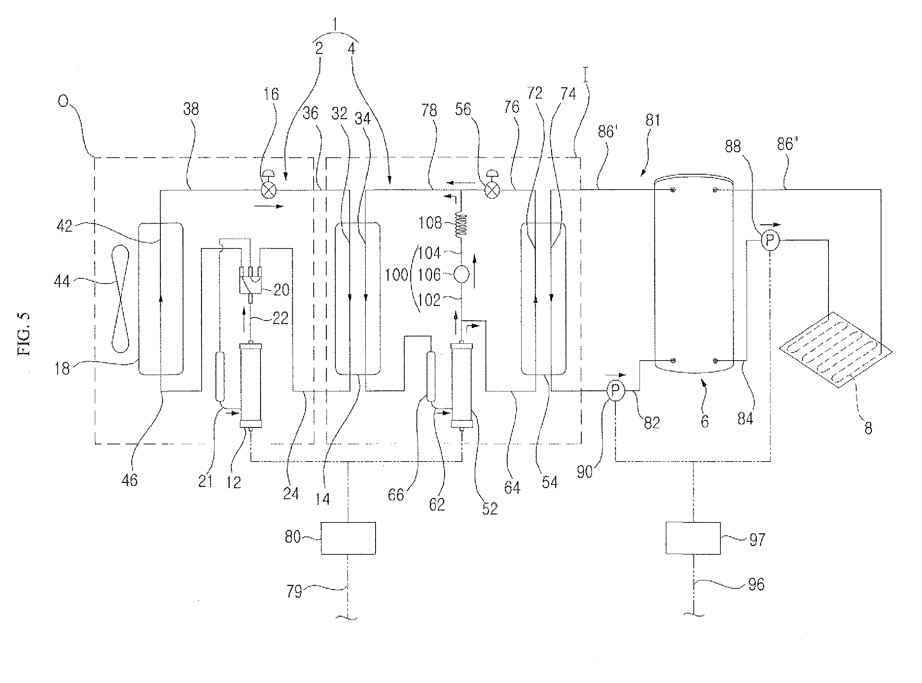

FIG. 5 is a configuration diagram showing a flow of a refrigerant and a flow of a heat medium in a heat storing apparatus having a cascade cycle according to another exemplary embodiment of the present invention.

In the heat storing apparatus having the cascade cycle according to the exemplary embodiment, as shown in FIG. 5, the heat storage tank 6 is connected with the heat storage heat exchanger 54 through the first heat medium path, the heat storage tank 6 is connected with the heat demander 8 through the second heat medium path, and since configurations and operations other than the heat storage tank 6, the first heat medium path, and the second heat medium path are the same or similarly as those of the first exemplary embodiment, a detailed description will be omitted.

The first heat medium path may include a first heat storage heat exchanger-heat storage tank connection path 82 in which the heat medium heated in the heat storage heat exchanger 54 is supplied to the heat storage tank 6 and a second heat storage heat exchanger-heat storage tank connection path 86' in which the heat medium discharged from the heat storage tank 6 is supplied to the heat storage heat exchanger 54. A heat storage tank pump 90 may be installed in the first heat storage heat exchanger-heat storage tank connection path 82.

The second heat medium path may include a first heat storage tank-heat demander connection path 84 in which the heat medium heated in the heat storage tank 6 is supplied to the heat demander and a second heat storage tank-heat demander connection path 86" in which the heat medium discharged from the heat demander 8 is supplied to the heat storage tank 6. A heat demander pump 88 may be installed in the first heat storage tank-heat demander connection path 84.

In the heat storing apparatus having the cascade cycle according to the exemplary embodiment, when the heat pump 1 is driven, the heat storage tank pump 90 may be driven and when the heat demander 8 has a load, the heat demander pump 88 may be driven.

That is, when the heat pump 1 is driven, the heat medium flows by the heat storage tank pump 90 to be circulated to the heat storage heat exchanger 54 and the heat storage tank 6 to heat the heat storage tank 6 and when the heat demander pump 88 is driven, the heat medium of the heat storage tank 6 flows by the heat demander pump 88 to be circulated to the heat storage tank 6 and the heat demander 8 to heat the heat demander 8.

## Claims

1. A heat storing apparatus having a cascade cycle, comprising:
a low-temperature cooling cycle having a heat storage mode in which a first refrigerant evaporates a second refrigerant in a cascade heat exchanger (14) while the first refrigerant is circulated to a low-pressure compressor (12), a cascade heat exchanger (14), a low-pressure expansion mechanism (16), and an outdoor heat exchanger (18) in sequence and a defrost mode in which the first refrigerant defrosts the outdoor heat exchanger (18) while the first refrigerant is circulated to the low-pressure compressor (12), the outdoor heat exchanger (18), the low-pressure expansion mechanism (16), and a cascade heat exchanger in sequence (14);
a high-pressure cooling cycle in which the second refrigerant heats a heat medium in the heat storage heat exchanger (54) while the second refrigerant is circulated to a high-pressure compressor (52), a heat storage heat exchanger (54), a high-pressure expansion mechanism (56), and the cascade heat exchanger in sequence (14);
a heat storage tank (6) connected with the heat storage heat exchanger (54) through a heat medium path (81); and
a bypass mechanism (100) installed to bypass some of the second refrigerants compressed in the high-pressure compressor (52) to the cascade heat exchanger (14).

2. The heat storing apparatus of claim 1, wherein the bypass mechanism (100) bypasses some of the second refrigerants in the defrost mode of the lower-temperature cooling cycle.

3. The heat storing apparatus of claim 1, wherein the bypass mechanism (100) is connected between the high-pressure expansion mechanism (56) and the cascade heat exchanger (14).

4. The heat storing apparatus of claim 3, wherein the bypass mechanism (100) includes a first bypass path (102) connected between the high-pressure compressor (52) and the heat storage heat exchanger (54), a second bypass path (104) connected between the high-pressure expansion mechanism (56) and the cascade heat exchanger (14), and a bypass valve (106) connecting the first bypass path (102) and the second bypass path (104) and controlling the second refrigerant.

5. The heat storing apparatus of claim 4, wherein the bypass valve (106) is opened when the low-temperature cooling cycle is in the defrost mode and closed when the low-temperature cooling cycle is in the heat storage mode.

6. The heat storing apparatus of claim 5, wherein the bypass mechanism (100) further includes a flow controller (108) controlling the amount of the bypassed second refrigerants.

7. The heat storing apparatus of claim 6, wherein the flow controller (108) is a capillary tube installed at least at one side of the first bypass path (102) and the second bypass path (104).

8. The heat storing apparatus of any of claims 1 to 7, further comprising a control unit (110) controlling the low-temperature cooling cycle and the high-temperature cooling cycle and controlling the bypass mechanism (100) under a defrost condition.

9. The heat storing apparatus of any of claims 1 to 8, further comprising:
a heat medium pump (88, 90) installed in the heat medium path (81) to pump the heat medium,
wherein a midnight power supplying line supplying midnight power is connected to the low-temperature cooling cycle and the high-temperature cooling cycle, and
a general power supplying line (96) supplying general power is connected to the heat medium pump (88, 90).

10. The heat storing apparatus of any of claims 1 to 9, wherein the low-pressure compressor (12), the low-pressure expansion mechanism (16), and the outdoor heat exchanger (18) are installed in an outdoor unit (O), and
the cascade heat exchanger (14), the high-pressure compressor (52), the heat storage heat exchanger (54), and the high-pressure expansion mechanism (56) are installed in an indoor unit (I).

11. A control process of a heat storing apparatus of any of claims 1 to 10, comprising:
a heat storing operation of storing heat in a heat storage tank (6) by driving both a low-temperature cooling cycle and a high-temperature cooling cycle in a heat storage mode; and
a defrost and heat storing operation of switching the low-temperature cooling cycle to a defrost mode and bypassing some of second refrigerants compressed in a high-pressure compressor (52) of the high-temperature cooling cycle to a cascade heat exchanger (14) after the heat storing operation.

12. The operation process of claim 11, wherein after the defrost and heat storing operation is terminated, the heat storing operation is returned.
